# EUROPEAN PATENT APPLICATION

(11) **EP 4 545 344 A1**
(43) Date of publication of application: **30.04.2025**
(21) Application number: 24204132.5
(22) Date of filing: 02.10.2024
(51) Int. Cl.: B60L 15/20, B60K 17/356, B60L 15/32

(54) **METHOD AND APPARATUS FOR DISTRIBUTING TORQUES OF ELECTRIC DRIVE AXLES**

(30) Priority: 23.10.2023 CN 202311377912
(71) Applicant: Robert Bosch GmbH, 70442 Stuttgart (DE)
(72) Inventor: ZHANG, Hantian, Jiangsu, 214000 (CN); LIU, Hailiang, Jiangsu, 214000 (CN)

(57) **Abstract**

The present application relates to a method for distributing torques of electric drive axles, the method comprising: receiving a wheel end demand torque; determining a corresponding energy efficiency calculation state and all torque combinations based on the wheel end demand torque and limit values of the electric drive axles; calculating corresponding power using efficiency of the electric drive axles for each of all torque combinations, respectively; and screening a torque combination corresponding to the maximum power to determine the most economical torque combination. The present application also relates to an apparatus for distributing torques of electric drive axles, a computer-readable storage medium, a computer program product, and an electric drive axle system.

## Description

### Technical Field

The present application relates to the field of electric drive axle torque control, and more particularly relates to a method and apparatus for distributing torques of electric drive axles, a computer-readable storage medium, a computer program product, and an electric drive axle system.

### Background Art

An electric drive axle, also known as an electric bridge, is a type of drive axle, its power device is adjusted from driving by an original internal combustion engine to driving by a motor, and most of electric drive axles integrate motors onto axles for implementing integration, high efficiency and other functions.

A heavy truck with dule electric drive axles and four drives is taken as an example. Since there are two electric drive axles and each electric drive axle has four gears, maximum carrying torque values of the two electric drive axles may be different. In an existing solution, torques are generally distributed equally to the two axles, but because the efficiency and the maximum carrying torque values of the two electric drive axles are different, the most economical torque combination (or the optimum economic torque ratio) cannot be obtained by distributing the torques equally to minimize power consumption.

### Summary of the Invention

According to one aspect of the present application, a method for distributing torques of electric drive axles is provided, the method comprising: receiving a wheel end demand torque; determining a corresponding energy efficiency calculation state and all torque combinations based on the wheel end demand torque and limit values of the electric drive axles; calculating corresponding power using efficiency of the electric drive axles for each of all torque combinations, respectively; and screening a torque combination corresponding to the maximum power to determine the most economical torque combination.

As a supplement to or replacement of the above solution, in the above method, receiving the wheel end demand torque comprises: receiving a total wheel end demand torque Tq; receiving a front electric drive axle wheel end demand torque Tq_{F}; and receiving a rear electric drive axle wheel end demand torque Tq_{R}, wherein the total wheel end demand torque Tq = the front electric drive axle wheel end demand torque Tq_{F} + the rear electric drive axle wheel end demand torque Tq_{R}.

As a supplement to or a replacement of the above solution, in the above method, determining the corresponding energy efficiency calculation state and all torque combinations based on the wheel end demand torque and the limit values of the electric drive axles comprises: when a front electric drive axle wheel end limit torque Tq_{Fmax} and a rear electric drive axle wheel end limit torque Tq_{Rmax} are both greater than or equal to the total wheel end demand torque Tq, and the total wheel end demand torque Tq is greater than 0, determining that the energy efficiency calculation state is a first working condition and a corresponding torque combination number is a first torque combination number N1=Tq/Tq_{dif}, wherein Tq_{dif} represents a gradient torque; when the front electric drive axle wheel end limit torque Tq_{Fmax} is less than the total wheel end demand torque Tq, the rear electric drive axle wheel end limit torque Tq_{Rmax} is greater than or equal to the total wheel end demand torque Tq, and the total wheel end demand torque Tq is greater than 0, determining that the energy efficiency calculation state is a second working condition and a corresponding torque combination number is a second torque combination number N2=Tq_{Fmax}/Tq_{dif}; and when the front electric drive axle wheel end limit torque Tq_{Fmax} is greater than or equal to the total wheel end demand torque Tq, the rear electric drive axle wheel end limit torque Tq_{Rmax} is less than the total wheel end demand torque Tq, and the total wheel end demand torque Tq is greater than 0, determining that the energy efficiency calculation state is a third working condition and a corresponding torque combination number is a third torque combination number N3=Tq_{Rmax}/Tq_{dif}.

As a supplement to or a replacement of the above solution, in the above method, determining the corresponding energy efficiency calculation state and all torque combinations based on the wheel end demand torque and the limit values of the electric drive axles also comprises: when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is greater than or equal to the rear electric drive axle wheel end limit torque Tq_{Rmax}, determining that the energy efficiency calculation state is a fourth working condition and a corresponding torque combination number is a fourth torque combination number N4=(Tq_{Fmax}+Tq_{Rmax}-Tq)/Tq_{dif}; when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is less than the rear electric drive axle wheel end limit torque Tq_{Rmax}, determining that the energy efficiency calculation state is a fifth working condition and a corresponding torque combination number is a fifth torque combination number N5=(Tq_{Fmax}+Tq_{Rmax}-Tq)/Tq_{dif}; and when the sum of the front electric drive axle wheel end limit torque Tq_{Fmax} and the rear electric drive axle wheel end limit torque Tq_{Rmax} is less than or equal to the total wheel end demand torque Tq, determining that the energy efficiency calculation state is a sixth working condition and a corresponding torque combination number is a sixth torque combination number N6=1.

As a supplement to or a replacement of the above solution, in the above method, calculating the corresponding power using the efficiency of the electric drive axles for each of all torque combinations, respectively comprises: determining a first efficiency matrix corresponding to a torque matrix of the front electric drive axle; determining a second efficiency matrix corresponding to a torque matrix of the rear electric drive axle; calculating a first power matrix of the front electric drive axle and a second power matrix of the rear electric drive axle based on the first efficiency matrix and the second efficiency matrix, respectively; and summing the first power matrix with the second efficiency matrix to obtain a total power matrix.

As a supplement to or a replacement of the above solution, in the above method, screening the torque combination corresponding to the maximum power to determine the most economical torque combination comprises: screening the maximum power from the total power matrix; and determining, based on the maximum power, a first target torque and a first target gear of the front electric drive axle and a second target torque and a second target gear of the rear electric drive axle that are finally distributed.

According to another aspect of the present application, an apparatus for distributing torques of electric drive axles is provided, the apparatus comprising: a receiving device for receiving a wheel end demand torque; a determining device for determining a corresponding energy efficiency calculation state and all torque combinations based on the wheel end demand torque and limit values of the electric drive axles; a calculating device for calculating corresponding power using efficiency of the electric drive axles for each of all torque combinations, respectively; and a screening device for screening a torque combination corresponding to the maximum power to determine the most economical torque combination.

As a supplement or alternative to the above-mentioned solution, in the above apparatus, the receiving device comprises: a first receiving unit for receiving a total wheel end demand torque Tq; a second receiving unit for receiving a front electric drive axle wheel end demand torque Tq_{F}; and a third receiving unit for receiving a rear electric drive axle wheel end demand torque Tq_{R}, wherein the total wheel end demand torque Tq = the front electric drive axle wheel end demand torque Tq_{F} + the rear electric drive axle wheel end demand torque Tq_{R}.

As a supplement or alternative to the above-mentioned solution, in the above apparatus, the determining device is configured to: when a front electric drive axle wheel end limit torque Tq_{Fmax} and a rear electric drive axle wheel end limit torque Tq_{Rmax} are both greater than or equal to the total wheel end demand torque Tq, and the total wheel end demand torque Tq is greater than 0, determine that the energy efficiency calculation state is a first working condition and a corresponding torque combination number is a first torque combination number N1=Tq/Tq_{dif}, wherein Tq_{dif} represents a gradient torque; when the front electric drive axle wheel end limit torque Tq_{Fmax} is less than the total wheel end demand torque Tq, the rear electric drive axle wheel end limit torque Tq_{Rmax} is greater than or equal to the total wheel end demand torque Tq, and the total wheel end demand torque Tq is greater than 0, determine that the energy efficiency calculation state is a second working condition and a corresponding torque combination number is a second torque combination number N2=Tq_{Fmax}/Tq_{dif}; and when the front electric drive axle wheel end limit torque Tq_{Fmax} is greater than or equal to the total wheel end demand torque Tq, the rear electric drive axle wheel end limit torque Tq_{Rmax} is less than the total wheel end demand torque Tq, and the total wheel end demand torque Tq is greater than 0, determine that the energy efficiency calculation state is a third working condition and a corresponding torque combination number is a third torque combination number N3=Tq_{Rmax}/Tq_{dif}.

As a supplement or alternative to the above-mentioned solution, in the above apparatus, the determining device is also configured to: when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is greater than or equal to the rear electric drive axle wheel end limit torque Tq_{Rmax}, determine that the energy efficiency calculation state is a fourth working condition and a corresponding torque combination number is a fourth torque combination number N4=(Tq_{Fmax}+Tq_{Rmax}-Tq)/Tq_{dif}; when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is less than the rear electric drive axle wheel end limit torque Tq_{Rmax}, determine that the energy efficiency calculation state is a fifth working condition and a corresponding torque combination number is a fifth torque combination number N5=(Tq_{Fmax}+Tq_{Rmax}-Tq)/Tq_{dif}; and when the sum of the front electric drive axle wheel end limit torque Tq_{Fmax} and the rear electric drive axle wheel end limit torque Tq_{Rmax} is less than or equal to the total wheel end demand torque Tq, determine that the energy efficiency calculation state is a sixth working condition and a corresponding torque combination number is a sixth torque combination number N6=1.

As a supplement or alternative to the above-mentioned solution, in the above apparatus, the calculating device is configured to: determine a first efficiency matrix corresponding to a torque matrix of the front electric drive axle; determine a second efficiency matrix corresponding to a torque matrix of the rear electric drive axle; calculate a first power matrix of the front electric drive axle and a second power matrix of the rear electric drive axle based on the first efficiency matrix and the second efficiency matrix, respectively; and sum the first power matrix with the second efficiency matrix to obtain a total power matrix.

As a supplement or alternative to the above-mentioned solution, in the above apparatus, the screening device is configured to: screen the maximum power from the total power matrix; and determine, based on the maximum power, a first target torque and a first target gear of the front electric drive axle and a second target torque and a second target gear of the rear electric drive axle that are finally distributed.

According to yet another aspect of the present application, a computer-readable storage medium is provided, the medium comprises instructions, and the instructions, when running, perform the method as described above.

According to yet another aspect of the present application, a computer program product is provided, which comprises a computer program, and the computer program, when executed by the processor, implements the method as described above.

According to yet another aspect of the present application, an electric drive axle system is provided, the system comprising: a front electric drive axle comprising the apparatus for distributing torques of electric drive axles as described above, wherein the front electric drive axle is configured to receive a wheel end demand torque from a vehicle control unit VCU; and a rear electric drive axle for being in communication with the front electric drive axle to perform a target torque and a target gear distributed by the front electric drive axle.

The solution of distributing torques of electric drive axles according to an example of the present application determines the optimum torque distribution ratio in an economic mode by the wheel end demand torque, the limit values of the electric drive axles, and the efficiency of the electric drive axles. In particular, the solution of distributing torques of electric drive axles according to an example of the present application determines the corresponding energy efficiency calculation state and all torque combinations based on the wheel end demand torque and the limit values of the electric drive axles, calculates the corresponding power using the efficiency of the electric drive axles for each of all torque combinations, and finally screens the torque combination corresponding to the maximum power to determine the most economical torque combination. In this way, the solution of distributing torques of electric drive axles as described above can obtain the most economical torque combination such that the power consumption is minimal.

### Description of Accompanying Drawings

The foregoing and other objectives and advantages of the present application will become more fully apparent from the following detailed description taken in conjunction with the accompanying drawings, in which identical or similar elements are denoted by the same reference numerals.
FIG. 1 shows a flow diagram of a method for distributing torques of electric drive axles according to one example of the present application;
FIG. 2 shows a structure diagram of an apparatus for distributing torques of electric drive axles according to one example of the present application; and
FIG. 3 shows a structure diagram of a vehicle comprising an electric drive axle system according to one example of the present application.

### Specific Embodiments

In the following, a solution for distributing torques of electric drive axles according to various exemplary examples of the present application will be described in detail with reference to the accompanying drawings.

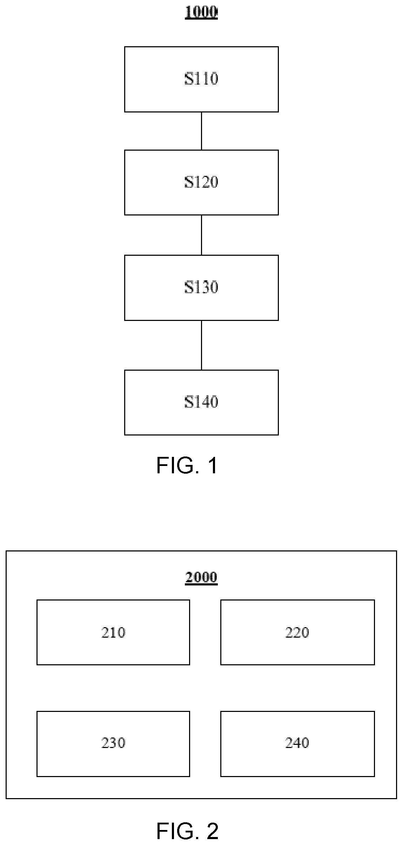

FIG. 1 shows a flow diagram of a method 1000 for distributing torques of electric drive axles according to one example of the present application. As shown in FIG. 1, the method 1000 for distributing torques of electric drive axles comprises the following steps:
in step S110, receiving a wheel end demand torque;
in step S120, determining a corresponding energy efficiency calculation state and all torque combinations based on the wheel end demand torque and limit values of the electric drive axles;
in step S130, calculating corresponding power using efficiency of the electric drive axles for each of all torque combinations, respectively; and
In step S140, screening the torque combination corresponding to the maximum power to determine the most economical torque combination.

In one example, in a dual-electric drive axle system, the wheel end demand torque may comprise: a total wheel end demand torque Tq, a front electric drive axle wheel end demand torque Tq_{F}, and a rear electric drive axle wheel end demand torque Tq_{R}. That is, in this example, step S110 may comprise: receiving a total wheel end demand torque Tq; receiving a front electric drive axle wheel end demand torque Tq_{F}; and receiving a rear electric drive axle wheel end demand torque Tq_{R}, wherein the total wheel end demand torque Tq = the front electric drive axle wheel end demand torque Tq_{F} + the rear electric drive axle wheel end demand torque Tq_{R}.

In step S120, the corresponding energy efficiency calculation state and all torque combinations are determined based on the wheel end demand torque and the limit values of the electric drive axles (e.g., the front electric drive axle wheel end limit torque Tq_{Fmax} and the rear electric drive axle wheel end limit torque Tq_{Rmax}).

In one example, step S120 comprises: when the front electric drive axle wheel end limit torque Tq_{Fmax} and the rear electric drive axle wheel end limit torque Tq_{Rmax} are both greater than or equal to the total wheel end demand torque Tq, and the total wheel end demand torque Tq is greater than 0, determining that the energy efficiency calculation state is a first working condition and a corresponding torque combination number is a first torque combination number N1=Tq/Tq_{dif}, wherein Tq_{dif} represents a gradient torque. In this example, the torque matrix of the front electric drive axle is [0, Tq_{dif}*1, Tq_{dif}*2,..., Tq_{dif}*N1], and the corresponding torque matrix of the rear electric drive axle is [Tq, Tq-Tq_{dif}*1, Tq-Tq_{dif}*2,..., Tq-Tq_{dif}*N1]. In other words, the torque combinations (i.e., [the front electric drive axle torque, the rear electric drive axle torque]) comprise the following: [0,Tq], [Tq_{dif}*1, Tq-Tq_{dif}*1], [Tq_{dif}*2, Tq-Tq_{dif}*2]...[Tq_{dif}*N1 Tq-Tq_{dif}*N1].

For example, assuming that the total demand torque is 100 N·m, if the gradient torque Tq_{dif} is 20 N·m, the torque of the dual electric drive axles has the following torque distribution combinations: [0,100], [20,80], [40,60], [60,40], [80,20], [100,0].

In another example, step S120 comprises: when the front electric drive axle wheel end limit torque Tq_{Fmax} is less than the total wheel end demand torque Tq, the rear electric drive axle wheel end limit torque Tq_{Rmax} is greater than or equal to the total wheel end demand torque Tq, and the total wheel end demand torque Tq is greater than 0, determining that the energy efficiency calculation state is a second working condition and a corresponding torque combination number is a second torque combination number N2=Tq_{Fmax}/Tq_{dif}. In this example, the torque matrix of the front electric drive axle is [0, Tq_{dif}*1, Tq_{dif}*2,..., Tq_{dif}*N2], and the corresponding torque matrix of the rear electric drive axle is [Tq, Tq-Tq_{dif}*1,Tq-Tq_{dif}*2,..., Tq-Tq_{dif}*N2]. In other words, the torque combinations comprise: [0, Tq], [Tq_{dif}*1, Tq-Tq_{dif}*1], [Tq_{dif}*2, Tq-Tq_{dif}*2]...[Tq_{dif}*N2,Tq-Tq_{dif}*N2].

In yet another example, step S120 comprises: when the front electric drive axle wheel end limit torque Tq_{Fmax} is greater than or equal to the total wheel end demand torque Tq, the rear electric drive axle wheel end limit torque Tq_{Rmax} is less than the total wheel end demand torque Tq, and the total wheel end demand torque Tq is greater than 0, determining that the energy efficiency calculation state is a third working condition and a corresponding torque combination number is a third torque combination number N3=Tq_{Rmax}/Tq_{dif}. In this example, the torque matrix of the front electric drive axle is [Tq-Tq_{Rmax}, Tq-Tq_{Rmax}+Tq_{dif}*1, Tq-Tq_{Rmax}+Tq_{dif}*2,..., Tq-Tq_{Rmax}+Tq_{dif}*N3], and the corresponding torque matrix of the rear electric drive axle is [Tq-(Tq-Tq_{Rmax}), Tq-(Tq-Tq_{Rmax}+Tq_{dif}*1), Tq-(Tq- Tq_{Rmax}+ Tq_{dif}*2),..., Tq-(Tq-Tq_{Rmax}+Tq_{dif}*N3)]. In other words, the torque combinations comprise: [Tq-Tq_{Rmax}, Tq-(Tq-Tq_{Rmax})], [Tq-Tq_{Rmax}+Tq_{dif}*1, Tq-(Tq-Tq_{Rmax}+Tq_{dif}*1)],[Tq-Tq_{Rmax}+Tq_{dif}*2, Tq-(Tq-Tq_{Rmax}+Tq_{dif}*2)],... , [Tq-Tq_{Rmax}+Tq_{dif}*N3, Tq-(Tq-Tq_{Rmax}+Tq_{dif}*N3)].

In yet another example, step S120 comprises: when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is greater than or equal to the rear electric drive axle wheel end limit torque Tq_{Rmax}, determining that the energy efficiency calculation state is a fourth working condition and a corresponding torque combination number is a fourth torque combination number N4=(Tq_{Fmax}+Tq_{Rmax}-Tq)/Tq_{dif}. In this example, the torque matrix of the front electric drive axle is [Tq-Tq_{Rmax}, Tq-Tq_{Rmax}+Tq_{dif}*1, Tq-Tq_{Rmax}+Tq_{dif}*2,..., Tq-Tq_{Rmax}+Tq_{dif}*N4], and the corresponding torque matrix of the rear electric drive axle is [Tq-(Tq-Tq_{Rmax}), Tq-(Tq-Tq_{Rmax}+Tq_{dif}*1), Tq- (Tq-Tq_{Rmax}+Tq_{dif}*2),..., Tq-(Tq-Tq_{Rmax}+Tq_{dif}*N4)]. In other words, the torque combinations comprise: [Tq-Tq_{Rmax}, Tq-(Tq-Tq_{Rmax})], [Tq-Tq_{Rmax}+Tq_{dif}*1, Tq-(Tq-Tq_{Rmax}+Tq_{dif}*1)], [Tq-Tq_{Rmax}+Tq_{dif}*2, Tq-(Tq-Tq_{Rmax}+Tq_{dif}*2)],... , [Tq-Tq_{Rmax}+Tq_{dif}*N4, Tq-(Tq-Tq_{Rmax}+Tq_{dif}*N4)].

In yet another example, step S120 comprises: when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is less than the rear electric drive axle wheel end limit torque Tq_{Rmax}, determining that the energy efficiency calculation state is a fifth working condition and a corresponding torque combination number is a fifth torque combination number N5=(Tq_{Fmax}+Tq_{Rmax}-Tq)/Tq_{dif}. In this example, the torque matrix of the front electric drive axle is [Tq- Tq_{Rmax}, Tq-Tq_{Rmax}+Tq_{dif}*1, Tq-Tq_{Rmax}+Tq_{dif}*2,..., Tq-Tq_{Rmax}+Tq_{dif}*N5], and the corresponding torque matrix of the rear electric drive axle is [Tq-(Tq-Tq_{Rmax}), Tq-(Tq-Tq_{Rmax}+Tq_{dif}*1), Tq-(Tq-Tq_{Rmax}+Tq_{dif}*2),..., Tq-(Tq-Tq_{Rmax}+Tq_{dif}*N5)]. In other words, the torque combinations comprise: [Tq-Tq_{Rmax}, Tq-(Tq-Tq_{Rmax})], [Tq-Tq_{Rmax}+Tq_{dif}*1, Tq-(Tq-Tq_{Rmax}+Tq_{dif}*1)], [Tq-Tq_{Rmax}+Tq_{dif}*2, Tq-(Tq-Tq_{Rmax}+Tq_{dif}*2)],... , [Tq-Tq_{Rmax}+Tq_{dif}*N5, Tq- (Tq-Tq_{Rmax}+Tq_{dif}*N5)].

In yet another example, step S120 comprises: when the sum of the front electric drive axle wheel end limit torque Tq_{Fmax} and the rear electric drive axle wheel end limit torque Tq_{Rmax} is less than or equal to the total wheel end demand torque Tq, determining that the energy efficiency calculation state is a sixth working condition and a corresponding torque combination number is a sixth torque combination number N6=1. In this example, the torque matrix of the front electric drive axle is [Tq_{Fmax}], and the corresponding torque matrix of the rear electric drive axle is [Tq_{Rmax}]. In other words, the torque combination is [Tq_{Fmax}, Tq_{Rmax}].

In step S130, corresponding power using efficiency of the electric drive axles is calculated for each of all torque combinations, respectively. For example, For statements can be used to calculate the power for all torque combinations for each cycle of working conditions at this time in a circulated mode. In one example, step S130 comprises: determining a first efficiency matrix corresponding to a torque matrix of the front electric drive axle; determining a second efficiency matrix corresponding to a torque matrix of the rear electric drive axle; calculating a first power matrix of the front electric drive axle and a second power matrix of the rear electric drive axle based on the first efficiency matrix and the second efficiency matrix, respectively; and summing the first power matrix with the second efficiency matrix to obtain a total power matrix.

Assuming that the efficiency of the electric drive axles corresponding to the same rotational speed and different torques is known to be η=[η₀, η₁, η₂,..., ηₙ]. The first working condition is taken as an example: if the rotational speed is not changed during a certain cycle, the first efficiency matrix corresponding to the torque matrix [0, Tq_{dif}*1, Tq_{dif}*2,..., Tq_{dif}*N1] of the front electric drive axle is [η_{F0}, η_{F1}, η_{F2},..., η_{FN1}]; and the second efficiency matrix corresponding to the torque matrix [Tq, Tq-Tq_{dif}*1,Tq-Tq_{dif}*2,..., Tq-Tq_{dif}*N1] of the rear electric drive axle is [η_{R0}, η_{R1}, η_{R2},..., η_{RN1}]. Next, the first power matrix [P_{F0},P_{F1},P_{F2},...,P_{FN1}] of the front electric drive axle and the second power matrix [P_{R0},P_{R1},P_{R2},...,P_{RN1}] of the rear electric drive axle are calculated using a power calculation formula. For example, assuming that the efficiency of electric drives (motor + motor controller) is f, the input power of the electric drive axles is P1=T*N/(9550*f), while the output power of the electric drive axles is P2=P1*η=T*N*η/(9550*f). Finally, the first power matrix and the second power matrix are summed to obtain a total power matrix of [P_{F0}+P_{R0}, P_{F1}+P_{R1}, P_{F2}+P_{R2}, ..., P_{FN1}+P_{RN1}].

In step S140, the torque combination corresponding to the maximum power is screened to determine the most economical torque combination. In one example, step S140 comprises: screening the maximum power from the total power matrix; and determining, based on the maximum power, a first target torque and a first target gear of the front electric drive axle and a second target torque and a second target gear of the rear electric drive axle that are finally distributed. The aforementioned first working condition is still taken as an example, after the total power matrix [P_{F0}+P_{R0}, P_{F1}+P_{R1}, P_{F2}+P_{R2},..., P_{FN1}+P_{RN1}] is obtained, assuming that the maximum value is P_{Fn}+P_{Rn}, it is finally distributed that the first target torque of the front electric drive axle is Tq_{dif}*n, and the second target torque of the rear electric drive axle is Tq-Tq_{dif}*n. That is, the most economical torque distribution combination is: [Tq_{F}= Tq_{dif}*n, Tq_{R}=Tq-Tq_{dif}*n]. It will be understood by those skilled in the art that in the case that the target torque is determined, the first target gear of the front electric drive axle and the second target gear of the rear electric drive axle may also be determined accordingly.

In addition, it will be readily understood by those skilled in the art that the method 1000 for distributing torques of electric drive axles provided in one or more examples of the present application may be implemented through a computer program. For example, the computer program is included in a computer program product, and the computer program, when executed by a processor, implements the method 1000 for distributing torques of electric drive axles provided in one or more examples of the present application. As another example, when a computer-readable storage medium (e.g., a USB flash drive) with which the computer program is stored is connected to a computer, running the computer program will execute the method 1000 for distributing torques of electric drive axles provided in one or more examples of the present application.

FIG. 2 shows a structure diagram of an apparatus 2000 for distributing torques of electric drive axles according to one example of the present application. As shown in FIG. 2, the apparatus 2000 for distributing torques of electric drive axles comprises: a receiving device 210, a determining device 220, a calculating device 230, and a screening device 240. Among them, the receiving device 210 is used for receiving a wheel end demand torque; the determining device 220 is used for determining a corresponding energy efficiency calculation state and all torque combinations based on the wheel end demand torque and limit values of the electric drive axles; the calculating device 230 is used for calculating corresponding power using efficiency of the electric drive axles for each of all torque combinations, respectively; and the screening device 240 is used for screening a torque combination corresponding to the maximum power to determine the most economical torque combination.

In one example, in a dual-electric drive axle system, the wheel end demand torque may comprise: a total wheel end demand torque Tq, a front electric drive axle wheel end demand torque Tq_{F}, and a rear electric drive axle wheel end demand torque Tq_{R}. That is, in this example, the receiving device 210 may comprise: a first receiving unit for receiving a total wheel end demand torque Tq; a second receiving unit for receiving a front electric drive axle wheel end demand torque Tq_{F}; and a third receiving unit for receiving a rear electric drive axle wheel end demand torque Tq_{R}, wherein the total wheel end demand torque Tq = the front electric drive axle wheel end demand torque Tq_{F} + the rear electric drive axle wheel end demand torque Tq_{R}.

The determining device 220 determines the corresponding energy efficiency calculation state and all torque combinations based on the wheel end demand torque and the limit values of the electric drive axles (e.g., the front electric drive axle wheel end limit torque Tq_{Fmax} and the rear electric drive axle wheel end limit torque Tq_{Rmax}).

In one example, the determining device 220 is configured to: when the front electric drive axle wheel end limit torque Tq_{Fmax} and the rear electric drive axle wheel end limit torque Tq_{Rmax} are both greater than or equal to the total wheel end demand torque Tq, and the total wheel end demand torque Tq is greater than 0, determine that the energy efficiency calculation state is a first working condition and a corresponding torque combination number is a first torque combination number N1=Tq/Tq_{dif}, wherein Tq_{dif} represents a gradient torque. In this example, the torque matrix of the front electric drive axle is determined to be [0, Tq_{dif}*1, Tq_{dif}*2,... , Tq_{dif}*N1], and the corresponding torque matrix of the rear electric drive axle is [Tq, Tq- Tq_{dif}*1,Tq-Tq_{dif}*2,..., Tq-Tq_{dif}*N1]. In other words, the torque combinations (i.e., [the front electric drive axle torque, the rear electric drive axle torque]) comprise the following: [0, Tq], [Tq_{dif}*1, Tq-Tq_{dif}*1], [Tq_{dif}*2, Tq-Tq_{dif}*2]...[Tq_{dif}*N1, Tq-Tq_{dif}*N1].

For example, assuming that the total demand torque is 100 N·m, if the gradient torque Tq_{dif} is 20 N·m, the torque of the dual electric drive axles has the following torque distribution combinations: [0,100], [20,80], [40,60], [60,40], [80,20], [100,0].

In another example, the determining device 220 is configured to: when the front electric drive axle wheel end limit torque Tq_{Fmax} is less than the total wheel end demand torque Tq, the rear electric drive axle wheel end limit torque Tq_{Rmax} is greater than or equal to the total wheel end demand torque Tq, and the total wheel end demand torque Tq is greater than 0, determine that the energy efficiency calculation state is a second working condition and a corresponding torque combination number is a second torque combination number N2=Tq_{Fmax}/Tq_{dif}. In this example, the torque matrix of the front electric drive axle is determined to be [0, Tq_{dif}*1, Tq_{dif}*2,..., Tq_{dif}*N2], and the corresponding torque matrix of the rear electric drive axle is [Tq, Tq-Tq_{dif}*1,Tq-Tq_{dif}*2,..., Tq-Tq_{dif}*N2]. In other words, the torque combinations comprise: [0, Tq], [Tq_{dif}*1,Tq-Tq_{dif}*1], [Tq_{dif}*2, Tq-Tq_{dif}*2]...[Tq_{dif}*N2,Tq-Tq_{dif}*N2].

In yet another example, the determining device 220 is configured to: when the front electric drive axle wheel end limit torque Tq_{Fmax} is greater than or equal to the total wheel end demand torque Tq, the rear electric drive axle wheel end limit torque Tq_{Rmax} is less than the total wheel end demand torque Tq, and the total wheel end demand torque Tq is greater than 0, determine that the energy efficiency calculation state is a third working condition and a corresponding torque combination number is a third torque combination number N3=Tq_{Rmax}/Tq_{dif}. In this example, the torque matrix of the front electric drive axle is determined to be [Tq-Tq_{Rmax}, Tq-Tq_{Rmax}+Tq_{dif}*1, Tq-Tq_{Rmax}+Tq_{dif}*2,..., Tq-Tq_{Rmax}+Tq_{dif}*N3], and the corresponding torque matrix of the rear electric drive axle is [Tq-(Tq-Tq_{Rmax}), Tq-(Tq-Tq_{Rmax}+Tq_{dif}*1), Tq-(Tq-Tq_{Rmax}+ Tq_{dif}*2),..., Tq-(Tq-Tq_{Rmax}+Tq_{dif}*N3)]. In other words, the torque combinations comprise: [Tq-Tq_{Rmax}, Tq-(Tq-Tq_{Rmax})], [Tq-Tq_{Rmax}+Tq_{dif}*1,Tq-(Tq-Tq_{Rmax}+Tq_{dif}*1)],[Tq-Tq_{Rmax}+Tq_{dif}*2,Tq-(Tq-Tq_{Rmax}+Tq_{dif}*2)], ... ,[Tq-Tq_{Rmax}+Tq_{dif}*N3, Tq-(Tq-Tq_{Rmax}+Tq_{dif}*N3)].

In yet another example, the determining device 220 is configured to: when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is greater than or equal to the rear electric drive axle wheel end limit torque Tq_{Rmax}, determine that the energy efficiency calculation state is a fourth working condition and a corresponding torque combination number is a fourth torque combination number N4=(Tq_{Fmax}+Tq_{Rmax}-Tq)/Tq_{dif}. In this example, the torque matrix of the front electric drive axle is determined to be [Tq-Tq_{Rmax}, Tq-Tq_{Rmax}+Tq_{dif}*1, Tq-Tq_{Rmax}+Tq_{dif}*2, ... , Tq- Tq_{Rmax}+Tq_{dif}*N4], and the corresponding torque matrix of the rear electric drive axle is [Tq-(Tq-Tq_{Rmax}), Tq-(Tq- Tq_{Rmax}+Tq_{dif}*1), Tq-(Tq-Tq_{Rmax}+Tq_{dif}*2),..., Tq-(Tq-Tq_{Rmax}+Tq_{dif}*N4)]. In other words, the torque combinations comprise: [Tq-Tq_{Rmax}, Tq-(Tq-Tq_{Rmax})], [Tq-Tq_{Rmax}+Tq_{dif}*1, Tq- (Tq-Tq_{Rmax}+Tq_{dif}*1)], [Tq-Tq_{Rmax}+Tq_{dif}*2, Tq-(Tq-Tq_{Rmax}+Tq_{dif}*2)],..., [Tq-Tq_{Rmax}+Tq_{dif}*N4, Tq-(Tq-Tq_{Rmax}+Tq_{dif}*N4)].

In yet another example, the determining device 220 is configured to: when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is less than the rear electric drive axle wheel end limit torque Tq_{Rmax}, determine that the energy efficiency calculation state is a fifth working condition and a corresponding torque combination number is a fifth torque combination number N5=(Tq_{Fmax}+Tq_{Rmax}-Tq)/Tq_{dif}. In this example, the torque matrix of the front electric drive axle is determined to be [Tq-Tq_{Rmax}, Tq-Tq_{Rmax}+Tq_{dif}*1, Tq-Tq_{Rmax}+Tq_{dif}*2, ... , Tq-Tq_{Rmax}+Tq_{dif}*N5], and the corresponding torque matrix of the rear electric drive axle is [Tq-(Tq-Tq_{Rmax}), Tq-(Tq-Tq_{Rmax}+Tq_{dif}*1), Tq-(Tq-Tq_{Rmax}+Tq_{dif}*2),..., Tq-(Tq-Tq_{Rmax}+Tq_{dif}*N5)]. In other words, the torque combinations comprise: [Tq-Tq_{Rmax}, Tq-(Tq-Tq_{Rmax})], [Tq-Tq_{Rmax}+Tq_{dif}*1, Tq-(Tq-Tq_{Rmax}+Tq_{dif}*1)], [Tq-Tq_{Rmax}+Tq_{dif}*2, Tq-(Tq-Tq_{Rmax}+Tq_{dif}*2)],..., [Tq-Tq_{Rmax}+Tq_{dif}*N5, Tq-(Tq-Tq_{Rmax}+Tq_{dif}*N5)].

In yet another example, the determining device 220 is configured to: when the sum of the front electric drive axle wheel end limit torque Tq_{Fmax} and the rear electric drive axle wheel end limit torque Tq_{Rmax} is less than or equal to the total wheel end demand torque Tq, determine that the energy efficiency calculation state is a sixth working condition and a corresponding torque combination number is a sixth torque combination number N6=1. In this example, the torque matrix of the front electric drive axle is determined to be [Tq_{Fmax}], and the corresponding torque matrix of the rear electric drive axle is [Tq_{Rmax}]. In other words, the torque combination is [Tq_{Fmax}, Tq_{Rmax}].

The calculating device 230 is configured to calculate the corresponding power using the efficiency of the electric drive axles for each of all torque combinations, respectively. For example, the calculating device 230 can use For statements to calculate the power for all torque combinations for each period of working conditions at this time in a circulated mode. In one example, the calculating device 230 is configured to: determine a first efficiency matrix corresponding to a torque matrix of the front electric drive axle; determine a second efficiency matrix corresponding to a torque matrix of the rear electric drive axle; calculate a first power matrix of the front electric drive axle and a second power matrix of the rear electric drive axle based on the first efficiency matrix and the second efficiency matrix, respectively; and sum the first power matrix with the second efficiency matrix to obtain a total power matrix.

It is assumed that the efficiency of the electric drive axles corresponding to the same rotational speed and different torques is known to be n=[η₀, η₁, η₂,..., ηₙ]. The first working condition is taken as an example: if the rotational speed is not changed during a certain cycle, the first efficiency matrix corresponding to the torque matrix [0, Tq_{dif}*1, Tq_{dif}*2,..., Tq_{dif}*N1] of the front electric drive axle is [η_{F0}, η_{F1}, η_{F7},..., η_{FN1}]; and the second efficiency matrix corresponding to the torque matrix [Tq, Tq-Tq_{dif}*1,Tq-Tq_{dif}*2,..., Tq-Tq_{dif}*N1] of the rear electric drive axle is [η_{R0}, η_{R1}, η_{R2},..., η_{RN1}]. Next, the first power matrix [P_{F0},P_{F1},P_{F2},... ,P_{FN1}] of the front electric drive axle and the second power matrix [P_{R0},P_{R1},P_{R2},...,P_{RN1}] of the rear electric drive axle are calculated by the calculating device 230 using a power calculation formula. For example, assuming that the efficiency of electric drives (motor + motor controller) is f, the input power of the electric drive axles is P1=T*N/(9550*f), while the output power of the electric drive axles is P2=P1*η=T*N*η/(9550*f). Finally, the first power matrix and the second power matrix are summed by the calculating device 230 to obtain a total power matrix of [P_{F0}+P_{R0}, P_{F1}+P_{R1}, P_{F2}+P_{R2}, ...,P_{FN1}+P_{RN1}].

The screening device 240 is used for screening the torque combination corresponding to the maximum power to determine the most economical torque combination. In one example, the screening device 240 is configured to: screen the maximum power from the total power matrix; and determine, based on the maximum power, a first target torque and a first target gear of the front electric drive axle and a second target torque and a second target gear of the rear electric drive axle that are finally distributed. The aforementioned first working condition is still taken as an example, after the total power matrix [P_{F0}+P_{R0}, P_{F1}+P_{R1}, P_{F2}+P_{R2}, ..., P_{FN1}+P_{RN1}] is obtained, assuming that the maximum value is P_{Fn}+P_{Rn}, the screening device 240 finally distributes the first target torque of the front electric drive axle to be Tq_{dif}*n and the second target torque of the rear electric drive axle to be Tq-Tq_{dif}*n. That is, the most economical torque distribution combination is: [Tq_{F}= Tq_{dif}*n, Tq_{R}=Tq-Tq_{dif}*n]. It will be understood by those skilled in the art that in the case that the target torque is determined, the first target gear of the front electric drive axle and the second target gear of the rear electric drive axle may also be determined accordingly.

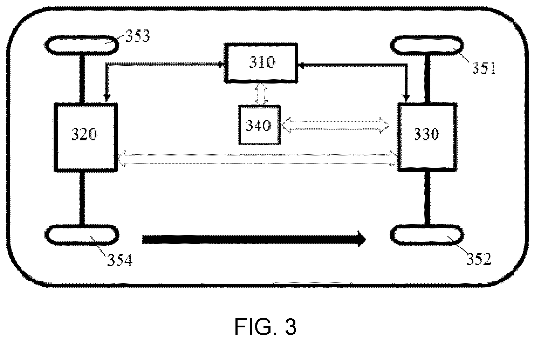

FIG. 3 shows a structure diagram of a vehicle comprising an electric drive axle system according to one example of the present application. In one example, the electric drive axle system may comprise: a front electric drive axle 330 comprising the apparatus 2000 for distributing torques of the electric drive axles as described above, wherein the front electric drive axle 330 is configured to receive a wheel end demand torque from a vehicle control unit VCU 340; and a rear electric drive axle 320 for being in communication with the front electric drive axle 330 (for example, through a CAN bus) to perform a target torque and a target gear distributed by the front electric drive axle 330. It will be understood that in the above examples, the front electric drive axle 330 is responsible for calculating the target gears and torques of the front electric drive axle and the rear electric drive axle.

In one example, referring further to FIG. 3, the electric drive axle system may further comprise a battery 310 that powers the front electric drive axle 330 and the rear electric drive axle 320 under the control of the vehicle control unit VCU 340. Additionally, in the context of the present application, the front electric drive axle 330 is used for controlling (driving) front wheels of a vehicle, including a left front wheel 351 and a right front wheel 352; and the rear electric drive axle 320 is used for controlling (driving) rear wheels of the vehicle, including a left rear wheel 353 and a right rear wheel 354.

In summary, the solution of distributing of torques of the electric drive axles according to an example of the present application determines the optimum torque distribution ratio in an economic mode by the wheel end demand torque, the limit values of the electric drive axles, and the efficiency of the electric drive axles. In particular, the solution of distributing torques of electric drive axles according to an example of the present application determines the corresponding energy efficiency calculation state and all torque combinations based on the wheel end demand torque and the limit values of the electric drive axles, calculates the corresponding power using the efficiency of the electric drive axles for each of all torque combinations, and finally screens the torque combination corresponding to the maximum power to determine the most economical torque combination. In this way, the solution of distributing torques of electric drive axles as described above can obtain the most economical torque combination such that the power consumption is minimal.

The above examples primarily illustrate the solution of distributing torques of electric drive axles according to an example of the present application. Although only some of the embodiments of the present application have been described, it should be understood by those with ordinary skill in the art that the present application may be implemented in various other forms without departing from its spirit and scope. For example, the present application primarily describes the solution of distributing torques of electric drive axles in connection with the dual-axle system, but it is understood that the solution of distributing torques of electric drive axles of the present application may be applicable to a multi-axle system, and not limited to the dual-axle system. Therefore, the examples and embodiments presented are illustrative rather than limiting, and the present application may encompass various modifications and replacements without departing from the spirit and scope defined by the various claims.

## Claims

1. A method for distributing torques of electric drive axles, **characterized in that** the method comprises:
receiving a wheel end demand torque;
determining a corresponding energy efficiency calculation state and all torque combinations based on the wheel end demand torque and limit values of the electric drive axles;
calculating corresponding power using efficiency of the electric drive axles for each of all torque combinations, respectively; and
screening a torque combination corresponding to the maximum power to determine the most economical torque combination.

2. The method according to Claim 1, wherein receiving the wheel end demand torque comprises:
receiving a total wheel end demand torque Tq;
receiving a front electric drive axle wheel end demand torque Tq_{F}; and
receiving a rear electric drive axle wheel end demand torque Tq_{R}, wherein the total wheel end demand torque Tq = the front electric drive axle wheel end demand torque Tq_{F} + the rear electric drive axle wheel end demand torque Tq_{R}.

3. The method according to Claim 2, wherein determining the corresponding energy efficiency calculation state and all torque combinations based on the wheel end demand torque and the limit values of the electric drive axles comprises:
when a front electric drive axle wheel end limit torque Tq_{Fmax} and a rear electric drive axle wheel end limit torque Tq_{Rmax} are both greater than or equal to the total wheel end demand torque Tq, and the total wheel end demand torque Tq is greater than 0, determining that the energy efficiency calculation state is a first working condition and a corresponding torque combination number is a first torque combination number N1=Tq/Tq_{dif}, wherein Tq_{dif} represents a gradient torque;
when the front electric drive axle wheel end limit torque Tq_{Fmax} is less than the total wheel end demand torque Tq, the rear electric drive axle wheel end limit torque Tq_{Rmax} is greater than or equal to the total wheel end demand torque Tq, and the total wheel end demand torque Tq is greater than 0, determining that the energy efficiency calculation state is a second working condition and a corresponding torque combination number is a second torque combination number N2=Tq_{Fmax}/Tq_{dif}; and
when the front electric drive axle wheel end limit torque Tq_{Fmax} is greater than or equal to the total wheel end demand torque Tq, the rear electric drive axle wheel end limit torque Tq_{Rmax} is less than the total wheel end demand torque Tq, and the total wheel end demand torque Tq is greater than 0, determining that the energy efficiency calculation state is a third working condition and a corresponding torque combination number is a third torque combination number N3=Tq_{Rmax}/Tq_{dif}.

4. The method according to Claim 3, wherein determining the corresponding energy efficiency calculation state and all torque combinations based on the wheel end demand torque and the limit values of the electric drive axles further comprises:
when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is greater than or equal to the rear electric drive axle wheel end limit torque Tq_{Rmax}, determining that the energy efficiency calculation state is a fourth working condition and a corresponding torque combination number is a fourth torque combination number N4=(Tq_{Fmax}+Tq_{Rmax}-Tq)/Tq_{dif};
when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is less than the rear electric drive axle wheel end limit torque Tq_{Rmax}, determining that the energy efficiency calculation state is a fifth working condition and a corresponding torque combination number is a fifth torque combination number N5=(Tq_{Fmax}+Tq_{Rmax}-Tq)/Tq_{dif}; and
when the sum of the front electric drive axle wheel end limit torque Tq_{Fmax} and the rear electric drive axle wheel end limit torque Tq_{Rmax} is less than or equal to the total wheel end demand torque Tq, determining that the energy efficiency calculation state is a sixth working condition and a corresponding torque combination number is a sixth torque combination number N6=1.

5. The method according to Claim 3 or 4, wherein calculating the corresponding power using the efficiency of the electric drive axles for each of all torque combinations, respectively comprises:
determining a first efficiency matrix corresponding to a torque matrix of a front electric drive axle;
determining a second efficiency matrix corresponding to a torque matrix of a rear electric drive axle;
calculating a first power matrix of the front electric drive axle and a second power matrix of the rear electric drive axle, respectively based on the first efficiency matrix and the second efficiency matrix; and
summing the first power matrix with the second power matrix to obtain a total power matrix.

6. The method according to Claim 5, wherein screening the torque combination corresponding to the maximum power to determine the most economical torque combination comprises:
screening the maximum power from the total power matrix; and
determining, based on the maximum power, a first target torque and a first target gear of the front electric drive axle and a second target torque and a second target gear of the rear electric drive axle that are finally distributed.

7. An apparatus for distributing torques of electric drive axles, **characterized in that** the apparatus comprises:
a receiving device for receiving a wheel end demand torque;
a determining device for determining a corresponding energy efficiency calculation state and all torque combinations based on the wheel end demand torque and limit values of the electric drive axles;
a calculating device for calculating corresponding power using efficiency of the electric drive axles for each of all torque combinations, respectively; and
a screening device for screening a torque combination corresponding to the maximum power to determine the most economical torque combination.

8. The apparatus according to Claim 7, wherein the receiving device comprises:
a first receiving unit for receiving a total wheel end demand torque Tq;
a second receiving unit for receiving a front electric drive axle wheel end demand torque Tq_{F}; and
a third receiving unit for receiving a rear electric drive axle wheel end demand torque Tq_{R}, wherein the total wheel end demand torque Tq = the front electric drive axle wheel end demand torque Tq_{F} + the rear electric drive axle wheel end demand torque Tq_{R}.

9. The apparatus according to Claim 8, wherein the determining device is configured to:
when a front electric drive axle wheel end limit torque Tq_{Fmax} and a rear electric drive axle wheel end limit torque Tq_{Rmax} are both greater than or equal to the total wheel end demand torque Tq, and the total wheel end demand torque Tq is greater than 0, determine that the energy efficiency calculation state is a first working condition and a corresponding torque combination number is a first torque combination number N1=Tq/Tq_{dif}, wherein Tq_{dif} represents a gradient torque;
when the front electric drive axle wheel end limit torque Tq_{Fmax} is less than the total wheel end demand torque Tq, the rear electric drive axle wheel end limit torque Tq_{Rmax} is greater than or equal to the total wheel end demand torque Tq, and the total wheel end demand torque Tq is greater than 0, determine that the energy efficiency calculation state is a second working condition and a corresponding torque combination number is a second torque combination number N2=Tq_{Fmax}/Tq_{dif}; and
when the front electric drive axle wheel end limit torque Tq_{Fmax} is greater than or equal to the total wheel end demand torque Tq, the rear electric drive axle wheel end limit torque Tq_{Rmax} is less than the total wheel end demand torque Tq, and the total wheel end demand torque Tq is greater than 0, determine that the energy efficiency calculation state is a third working condition and a corresponding torque combination number is a third torque combination number N3=Tq_{Rmax}/Tq_{dif}.

10. The apparatus according to Claim 9, wherein the determining device is further configured to:
when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is greater than or equal to the rear electric drive axle wheel end limit torque Tq_{Rmax}, determine that the energy efficiency calculation state is a fourth working condition and a corresponding torque combination number is a fourth torque combination number N4=(Tq_{Fmax}+Tq_{Rmax}-Tq)/Tq_{dif};
when the front electric drive axle wheel end limit torque Tq_{Fmax} and the rear electric drive axle wheel end limit torque Tq_{Rmax} are both less than the total wheel end demand torque Tq, but a sum of the front electric drive axle wheel end limit torque Tq_{Fmax} and the rear electric drive axle wheel end limit torque Tq_{Rmax} is greater than the total wheel end demand torque Tq, and the front electric drive axle wheel end limit torque Tq_{Fmax} is less than the rear electric drive axle wheel end limit torque Tq_{Rmax}, determine that the energy efficiency calculation state is a fifth working condition and a corresponding torque combination number is a fifth torque combination number N5=(Tq_{Fmax}+Tq_{Rmax}-Tq)/Tq_{dif}; and
when the sum of the front electric drive axle wheel end limit torque Tq_{Fmax} and the rear electric drive axle wheel end limit torque Tq_{Rmax} is less than or equal to the total wheel end demand torque Tq, determine that the energy efficiency calculation state is a sixth working condition and a corresponding torque combination number is a sixth torque combination number N6=1.

11. The apparatus according to Claim 9 or 10, wherein the calculating device is configured to:
determine a first efficiency matrix corresponding to a torque matrix of a front electric drive axle;
determine a second efficiency matrix corresponding to a torque matrix of a rear electric drive axle;
calculate a first power matrix of the front electric drive axle and a second power matrix of the rear electric drive axle, respectively based on the first efficiency matrix and the second efficiency matrix; and
sum the first power matrix with the second power matrix to obtain a total power matrix.

12. The apparatus according to Claim 11, wherein the screening device is configured to:
screen the maximum power from the total power matrix; and
determine, based on the maximum power, a first target torque and a first target gear of the front electric drive axle and a second target torque and a second target gear of the rear electric drive axle that are finally distributed.

13. A computer-readable storage medium, **characterized in that** the medium comprises instructions, the instructions, when running, perform the method according to any one of Claims 1 to 6.

14. A computer program product, comprising a computer program, **characterized in that** the computer program, when executed by a processor, performs the method according to any one of Claims 1 to 6.

15. An electric drive axle system, **characterized in that** the system comprises:
a front electric drive axle comprising the apparatus according to any one of Claims 7 to 12, wherein the front electric drive axle is configured to receive a wheel end demand torque from a vehicle control unit VCU; and
a rear electric drive axle used for being in communication with the front electric drive axle to perform a target torque and a target gear distributed by the front electric drive axle.
